(19) **Europäisches Patentamt European Patent Office Office européen des brevets**

(11) **EP 4 641 707 A1**

(12) **EUROPEAN PATENT APPLICATION**

(43) Date of publication:
**29.10.2025 Bulletin 2025/44**

(21) Application number: **25172109.8**

(22) Date of filing: **24.04.2025**

(51) International Patent Classification (IPC):
*H01M 4/64* (2006.01)    *H01M 10/052* (2010.01)
*H01M 10/42* (2006.01)    *H01M 50/534* (2021.01)
*H01M 50/536* (2021.01)   *H01M 4/66* (2006.01)

(52) Cooperative Patent Classification (CPC):
**H01M 10/052; H01M 4/64; H01M 10/4235;
H01M 50/536; H01M 4/661**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **24.04.2024 KR 20240054639**

(71) Applicant: **SAMSUNG SDI CO., LTD.
Yongin-si, Gyeonggi-do 17084 (KR)**

(72) Inventors:
• **Doo, Jae Gyun
  Suwon-si, Gyeonggi-do 16678 (KR)**
• **Park, Seung Young
  Suwon-si, Gyeonggi-do 16678 (KR)**
• **Kim, Gwi Jae
  Suwon-si, Gyeonggi-do 16678 (KR)**

(74) Representative: **Gulde & Partner
Patent- und Rechtsanwaltskanzlei mbB
Berliner Freiheit 2
10785 Berlin (DE)**

(54) **ELECTRODE ASSEMBLY FOR RECHARGEABLE LITHIUM BATTERY AND RECHARGEABLE LITHIUM BATTERY**

(57)    An electrode assembly and a rechargeable lithium battery including the same are disclosed. The electrode assembly can prevent generation of cracks between a current collector region provided with a tab and a current collector region without a tab, thereby improving reliability and lifespan. To this end, the electrode assembly has a structure in which a side surface of the tab is secured to the current collector by a thermoplastic resin.

FIG. 2

Description

BACKGROUND

1. Field

Aspects of embodiments of the present invention relate to an electrode assembly for rechargeable lithium batteries and a rechargeable lithium battery including the same.

2. Description of the Related Art

Rechargeable batteries can be charged and discharged, unlike primary cells that cannot be charged. Low-capacity batteries may be used in small, portable electronic devices, such as smartphones, feature phones, notebook computers, digital cameras, and camcorders, and high-capacity batteries are widely used as power sources for motors in hybrid and electric vehicles, for example, and as power storage cells. Such a battery includes an electrode assembly including a positive electrode and a negative electrode, a case receiving the electrode assembly, and electrode terminals connected to the electrode assembly.

With the development of technology, there is increasing demand for batteries with high capacity. Accordingly, a plurality of batteries may be electrically connected in use. For example, the batteries may be applied to an electronic device in the form of a battery module including a plurality of batteries and/or a battery pack including a plurality of battery modules. The electronic device may be an electronic device requiring high power and/or high capacity, and may include, for example, an electric vehicle.

A current collector includes an uncoated portion with no active material layer between active material layer regions. Tabs may be fused to the uncoated portion. A heat-resistant tape or a heat-resistant adhesive tape may be disposed to cover regions around the fused tabs and the entire uncoated portion to prevent or substantially prevent a short circuit.

During charge and discharge of a cell, expansion of the active material layer region causes strong compression between electrode plates, causing deformation of the current collector in a hollow space adjacent to the tab, for example, a middle tab. Repeated charging and discharging may result in concentration of stress on a region of the current collector adjoining a boundary of the middle tab and, as the current collector reaches a local elongation limit thereof, the current collector may crack. The cracks can reduce reliability of the battery due to increased cell resistance, heat generation around the cracks, and reduction in capacity.

This section is provided to provide a better understanding of the background of the invention and, thus, may include information which is not necessarily prior art.

SUMMARY

The invention is defined by the appended claims. The description that follows is subjected to this limitation. Any disclosure lying outside the scope of said claims is only intended for illustrative as well as comparative purposes.

According to an aspect of one or more embodiments of the present invention, an electrode assembly for rechargeable lithium batteries may prevent or substantially prevent crack generation in a region between a current collector region provided with a tab and a current collector region without a tab.

The above and other aspects and features of the present invention will become apparent from the following description of some embodiments of the present invention.

According to one or more embodiments of the present invention, in an electrode assembly, a side surface of a tab is secured to a current collector by a thermoplastic resin. The electrode assembly may be an electrode assembly for rechargeable lithium batteries.

According to embodiments of the present invention, the electrode assembly can prevent or substantially prevent crack generation in a region between a current collector region provided with a tab and a current collector region without a tab, thereby improving reliability and lifespan of a rechargeable lithium battery.

However, aspects and features of the invention are not limited to those described above and other aspects and features not mentioned will be clearly understood by those skilled in the art from the detailed description given below.

BRIEF DESCRIPTION OF THE DRAWINGS

The following drawings provided with this specification illustrate some embodiments of the present invention, and further describe aspects and features of the present invention together with the detailed description of the present invention. However, the present invention should not be construed as being limited to the drawings.

FIG. 1 is a perspective view of a rechargeable lithium battery according to an embodiment of the present invention;

FIG. 2 is a partial cross-sectional view of an electrode assembly for rechargeable lithium batteries according to an embodiment;

FIG. 3 is a partial cross-sectional view of an electrode assembly for rechargeable lithium batteries according to another embodiment;

FIG. 4 is a partial cross-sectional view of an electrode assembly for rechargeable lithium batteries according to another embodiment;

FIG. 5 is a partial cross-sectional view of an electrode assembly for rechargeable lithium batteries according to another embodiment;

FIG. 6 is a partial cross-sectional view of an electrode assembly for rechargeable lithium batteries according to another embodiment;

FIG. 7 is a partial cross-sectional view of an electrode assembly for rechargeable lithium batteries according to another embodiment; and

FIG. 8 is a schematic diagram of a method of manufacturing an electrode assembly for rechargeable lithium batteries according to an embodiment.

## DETAILED DESCRIPTION

Herein, some example embodiments of the present invention will be described in further detail with reference to the accompanying drawings. However, it is to be understood that the following embodiments are provided by way of illustration and the present invention is not limited thereto and is defined by the appended claims and equivalents thereto.

When an arbitrary element is referred to as being disposed (or disposed or disposed) "above" (or "below") or "on" (or "under") a component, it may mean that the arbitrary element is placed in contact with the upper (or lower) surface of the component and may also mean that one or more other components may be interposed between the component and any arbitrary element disposed (or disposed or disposed) on (or under) the component

Throughout the specification, unless specified otherwise, each element may be singular or plural.

As used herein, "combinations thereof" may refer to mixtures, stacks, composites, copolymers, alloys, blends, and reaction products of components.

The terminology used herein is for the purpose of describing embodiments of the present invention and is not intended to be limiting of the present invention.

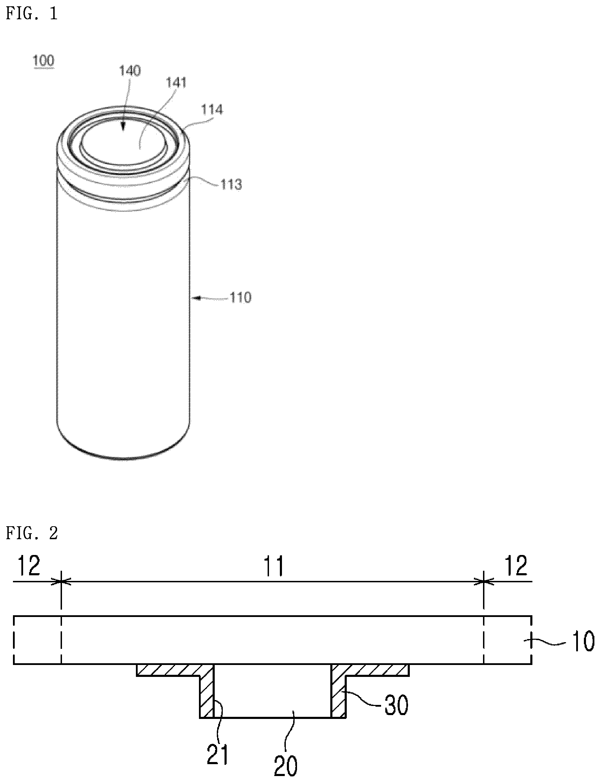

FIG. 1 is a perspective view of a cylindrical battery according to an embodiment of the present invention.

Referring to FIG. 1, a secondary battery 100 according to an embodiment includes an electrode assembly (not shown) for rechargeable lithium batteries, a case 110 that receives the electrode assembly and an electrolyte therein, a cap assembly 140 coupled to an opening of the case 110 and sealing the case 110, and an insulating plate (not shown) interposed between the electrode assembly and the cap assembly.

The case 110 receives the electrode assembly and the electrolyte therein, and constitutes an external appearance of the battery together with the cap assembly 140. In an embodiment, the case 110 may include a generally cylindrical body and a bottom connected to a side of the body. The body may be formed with an inwardly recessed beading portion 113 and a crimping portion 114 bent inward at an end of an opening of the body.

The beading portion 113 can suppress movement of the electrode assembly within the case while facilitating seating of a gasket and the cap assembly 140. The crimping portion 114 can press an edge of the cap assembly through the gasket to securely hold the cap assembly 140 in place. The case 110 may be formed of, for example, nickel-plated iron.

The cap assembly 140 may be secured to the interior of the crimping portion through the gasket to seal the case 110. In an embodiment, the cap assembly 140 may include a cap-up, a safety vent, a cap-down, an insulating member, and a sub-plate, without being limited thereto.

The cap-up may be disposed at an uppermost side of the cap assembly 140. The cap-up may include a terminal convexly protruding upward to be connected to an external circuit, and a vent disposed around the terminal to vent a gas.

The safety vent may be disposed under the cap-up. The safety vent may include a protrusion convexly protruding downward to be connected to the sub-plate, and at least one notch disposed around the protrusion.

In an event of gas generation due to overcharging or abnormal operation of the secondary battery, the protrusion can be deformed upward under pressure to be separated from the sub-plate while the safety vent can be incised along the notch. The incised safety vent can prevent or substantially prevent explosion of the secondary battery by venting the gas to the outside.

The cap-down may be disposed under the safety vent. The cap-down may include a first opening for exposing the protrusion of the safety vent and a second opening for venting the gas. The insulating member may be disposed between the safety vent and the cap-down to insulate the safety vent and the cap-down.

The sub-plate may be disposed under the cap-down. The sub-plate may be secured to a lower surface of the cap-down to block the first opening of the cap-down, and the protrusion of the safety vent may be secured to the sub-plate. A first lead tab withdrawn from the electrode assembly may be secured to the sub-plate. Accordingly, the cap-up, the safety vent, the cap-down, and the sub-plate may be electrically connected to the first electrode of the electrode assembly.

The insulating plate may be disposed to adjoin the electrode assembly beneath the beading portion, and the insulating plate may be provided with a tab opening to withdraw the first lead tab. The cap assembly 140, which is electrically connected to the first electrode by the first lead tab, may face the electrode assembly, with the insulating plate disposed therebetween, and may be insulated from the electrode assembly by the insulating plate.

The electrode assembly may include a separator, and a first electrode and a second electrode, with the separator interposed therebetween, and, in an embodiment, may be rolled into a jelly-roll shape.

The first electrode includes a first substrate and a first active material layer disposed on the first substrate. A first lead tab may extend outward from a first uncoated portion of the first substrate where the first active material layer is not disposed, and may be electrically connected to the cap assembly 140.

The second electrode includes a second substrate and a second active material layer disposed on the second substrate. A second lead tab may extend outward from a second uncoated portion of the second substrate where the second active material layer is not disposed, and may be electrically connected to the case 110. In an embodiment, the first lead tab and the second lead tab may extend in opposite directions.

The first electrode may act as a positive electrode.

The second electrode may act as a negative electrode.

The separator functions to prevent or substantially prevent a short circuit of the first and second electrodes while allowing migration of lithium ions. The separator may include, for example, a polyethylene film, a polypropylene film, a polyethylene-polypropylene film, or the like.

## Positive electrode

The positive electrode may include a current collector and a positive electrode material layer disposed on the current collector. The positive electrode material layer may include a positive electrode material and may further include a binder and/or a conductive material. By way of example, the positive electrode may further include an additive capable of acting as a sacrificial positive electrode.

## Positive electrode material

As the positive electrode material, a compound allowing reversible intercalation and deintercalation of lithium (lithiated intercalation compound) may be used. In an embodiment, the positive electrode material may be at least one complex oxide of a metal selected from among cobalt, manganese, nickel and combinations thereof with lithium.

The composite oxide may be a lithium transition metal composite oxide. In an embodiment, the composite oxide may be a lithium nickel oxide, a lithium cobalt oxide, a lithium manganese oxide, a lithium iron phosphate compound, a cobalt-free lithium manganese oxide, or a combination thereof.

By way of example, the composite oxide may be a compound represented by any of the following formulas: $Li_aA_{1-b}X_bO_{2-c}D_c$ ($0.90 \leq a \leq 1.8$, $0 \leq b \leq 0.5$, $0 \leq c \leq 0.05$); $Li_aMn_{2-b}X_bO_{4-c}D_c$ ($0.90 \leq a \leq 1.8$, $0 \leq b \leq 0.5$, $0 \leq c \leq 0.05$); $Li_aNi_{1-b-c}Co_bX_cO_{2-\alpha}D_\alpha$ ($0.90 \leq a \leq 1.8$, $0 \leq b \leq 0.5$, $0 \leq c \leq 0.5$, $0 < \alpha < 2$); $Li_aNi_{1-b-c}Mn_bX_cO_{2-\alpha}D_\alpha$ ($0.90 \leq a \leq 1.8$, $0 \leq b \leq 0.5$, $0 \leq c \leq 0.5$, $0 < \alpha < 2$); $Li_aNi_bCo_cL^1_{d-}G_eO_2$ ($0.90 \leq a \leq 1.8$, $0 \leq b \leq 0.9$, $0 \leq c \leq 0.5$, $0 \leq d \leq 0.5$, $0 \leq e \leq 0.1$); $Li_aNiG_bO_2$ ($0.90 \leq a \leq 1.8$, $0.001 \leq b \leq 0.1$); $Li_aCoG_bO_2$ ($0.90 \leq a \leq 1.8$, $0.001 \leq b \leq 0.1$); $Li_aMn_{1-b}G_bO_2$ ($0.90 \leq a \leq 1.8$, $0.001 \leq b \leq 0.1$); $Li_aMn_2G_bO_4$ ($0.90 \leq a \leq 1.8$, $0.001 \leq b \leq 0.1$); $Li_aMn_{1-g}G_gPO_4$ ($0.90 \leq a \leq 1.8$, $0 \leq g \leq 0.5$); $Li_{(3-f)}Fe_2(PO_4)_3$ ($0 \leq f \leq 2$); and $Li_aFePO_4$ ($0.90 \leq a \leq 1.8$).

In the above formulas, A is Ni, Co, Mn, or a combination thereof; X is Al, Ni, Co, Mn, Cr, Fe, Mg, Sr, V, a rare-earth element, or a combination thereof; D is O, F, S, P, or a combination thereof; G is Al, Cr, Mn, Fe, Mg, La, Ce, Sr, V, or a combination thereof; $L^1$ is Mn, Al, or a combination thereof.

In an embodiment, the positive electrode material may be a high nickel-content positive electrode material containing 80 mol% or more, 85 mol% or more, 90 mol% or more, 91 mol% or more, or 94 mol% to 99 mol% of nickel based on 100 mol% of metals excluding lithium in the lithium transition metal composite oxide. The high nickel-content positive electrode material can realize high capacity and thus can be applied to high capacity/high density rechargeable lithium batteries.

In an embodiment, the positive electrode material may be present in an amount of 90 wt% to 99.5 wt% based on 100 wt% of the positive electrode material layer and each of the binder and the conductive material may be present in an amount of 0.5 wt% to 5 wt% based on 100 wt% of the positive electrode material layer.

The binder functions to attach positive electrode material particles to each other while attaching the positive electrode material to the current collector. The binder may include, for example, polyvinyl alcohol, carboxymethylcellulose, hydroxypropylcellulose, diacetylcellulose, polyvinyl chloride, carboxylated polyvinyl chloride, polyvinyl fluoride, polymers including ethylene oxide, polyvinyl pyrrolidone, polyurethane, polytetrafluoroethylene, polyvinylidene fluoride, polyethylene, polypropylene, styrene-butadiene rubbers, (meth)acrylated styrene-butadiene rubbers, epoxy resins, (meth)acrylic resins, polyester resins, Nylon, and the like, without being limited thereto.

The conductive material imparts conductivity to the electrodes and may be any electrically conductive material that does not cause chemical change in cells under construction. The conductive material may include, for example, any of carbon materials, such as natural graphite, artificial graphite, carbon black, acetylene black, Ketjen black, carbon fibers, carbon nanofibers, carbon nanotubes, and the like; metal-based materials in the form of metal powders or metal fibers containing copper, nickel, aluminum, silver, and the like; conductive polymers, such as polyphenylene derivatives and the like; and mixtures thereof.

The current collector may include Al or the like, without being limited thereto.

**Negative electrode**

The negative electrode includes a current collector and a negative electrode material layer disposed on the current collector. The negative electrode material layer includes a negative electrode material and may further include a binder and/or a conductive material.

For example, the negative electrode material layer may include 90 wt% to 99 wt% of the negative electrode material, 0.5 wt% to 5 wt% of the binder, and 0 wt% to 5 wt% of the conductive material.

**Negative electrode material**

The negative electrode material includes a material allowing reversible intercalation/deintercalation of lithium ions, lithium metal, a lithium metal alloy, a material capable of being doped to lithium and de-doped therefrom, or a transition metal oxide.

The material allowing reversible intercalation/deintercalation of lithium ions may include a carbon-based negative electrode material, for example, crystalline carbon, amorphous carbon, or a combination thereof. The crystalline carbon may include, for example, graphite, such as natural graphite or artificial graphite, in amorphous, plate, flake, spherical, or fibrous form, and the amorphous carbon may include, for example, soft carbon, hard carbon, mesoporous pitch carbides, calcined coke, and the like.

As the lithium metal alloy, an alloy of lithium and a metal selected from among Na, K, Rb, Cs, Fr, Be, Mg, Ca, Sr, Si, Sb, Pb, In, Zn, Ba, Ra, Ge, Al and Sn may be used.

The material capable of being doped to lithium and de-doped therefrom may be an Si-based negative electrode material or an Sn-based negative electrode material. The Si-based negative electrode material may be silicon, a silicon-carbon composite, $SiO_x$ ($0<x\leq2$), Si-Q alloys (where Q is selected from among alkali metals, alkali-earth metals, Group XIII elements, Group XIV elements (excluding Si), Group XV elements, Group XVI elements, transition metals, rare-earth elements, and combinations thereof), or a combination thereof. The Sn-based negative electrode material may be Sn, $SnO_2$, an Sn alloy, or a combination thereof.

The silicon-carbon composite may be a composite of silicon and amorphous carbon. According to an embodiment, the silicon-carbon composite may be prepared in the form of silicon particles having an amorphous carbon coating formed on the surface thereof. For example, the silicon-carbon composite may include secondary particles (cores) composed of primary silicon particles and an amorphous carbon coating layer (shell) formed on the surface of the second secondary particle. The amorphous carbon may also be placed between the primary silicon particles such that, for example, the primary silicon particles are coated with amorphous carbon. In an embodiment, the secondary particles may be dispersed in an amorphous carbon matrix.

The silicon-carbon composite may further include crystalline carbon. For example, the silicon-carbon composite may include a core containing crystalline carbon and silicon particles, and an amorphous carbon coating layer disposed on the core.

The Si-based negative electrode material or the Sn-based negative electrode material may be used in combination with the carbon-based negative electrode material.

The binder functions to attach the negative electrode material particles to each other while attaching the negative electrode material to the current collector. The binder may be a non-aqueous binder, an aqueous binder, a dry binder, or a combination thereof.

The non-aqueous binder may include polyvinyl chloride, carboxylated polyvinyl chloride, polyvinyl fluoride, ethylene propylene copolymers, polystyrene, polyurethane, polytetrafluoroethylene, polyvinylidene fluoride, polyethylene, polypropylene, polyamideimide, polyimide, or combinations thereof.

The aqueous binder may be selected from the group consisting of styrene-butadiene rubbers, (meth)acrylated styrene-butadiene rubbers, (meth)acrylonitrile-butadiene rubbers, (meth)acrylic rubbers, butyl rubbers, fluorinated rubbers, polyethylene oxide, polyvinyl pyrrolidone, polyepichlorohydrin, polyphosphazene, poly(meth)acrylonitrile, ethylene propylene diene copolymers, polyvinyl pyridine, chlorosulfonated polyethylene, latex, polyester resins, (meth)acryl resins, phenol resins, epoxy resins, polyvinyl alcohol, and combinations thereof.

If the aqueous binder is used as the negative electrode binder, a cellulose-based compound capable of imparting viscosity may be further included. The cellulose-based compound may be a mixture of carboxymethylcellulose, hydroxypropyl methylcellulose, methylcellulose, or alkali metal salts thereof. The alkali metal may be Na, K, or Li.

The dry binder may be a fibrous polymeric material and may include, for example, polytetrafluoroethylene, polyvinylidene fluoride, a polyvinylidene fluoride-hexafluoropropylene copolymer, polyethylene oxide, or a combination thereof.

The conductive material imparts conductivity to an electrode and may be any electrically conductive material that does not cause chemical change in cells under construction. In an embodiment, the conductive material may include, for example, any of carbon materials, such as natural graphite, artificial graphite, carbon black, acetylene black, Ketjen black, carbon fibers, carbon nanofibers, carbon nanotubes, and the like; metal-based materials in the form of metal powders or metal fibers containing copper, nickel, aluminum, silver, and the like; conductive polymers, such as polyphenylene derivatives and the like; or mixtures thereof.

In an embodiment, the negative electrode current collector may be selected from copper foil, nickel foil, stainless steel foil, titanium foil, nickel foam, copper foam, a conductive metal-coated polymer base, and combinations thereof.

**Electrolyte**

The electrolyte includes a non-aqueous organic solvent and a lithium salt.

The non-aqueous organic solvent acts as a medium through which ions involved in electrochemical reaction of a cell can move.

The non-aqueous organic solvent may be a carbonate-based solvent, an ester-based solvent, an ether-based solvent, a ketone-based solvent, an alcohol-based solvent, a non-amphoteric solvent, or a combination thereof.

The carbonate-based solvents may include dimethyl carbonate (DMC), diethyl carbonate (DEC), dipropyl carbonate (DPC), methyl propyl carbonate (MPC), ethyl propyl carbonate (EPC), methyl ethyl carbonate (MEC), ethylene carbonate (EC), propylene carbonate (PC), butylene carbonate (BC), and the like.

The ester-based solvents may include methyl acetate, ethyl acetate, n-propyl acetate, dimethyl acetate, methyl propionate, ethyl propionate, decanolide, mevalonolactone, valerolactone, caprolactone, and the like.

The ether-based solvents may include dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone and the like. The alcohol-based solvents may include ethyl alcohol, isopropyl alcohol, and the like, and the non-amphoteric solvent may include nitriles, such as R-CN (where R is a straight, branched or cyclic hydrocarbon group having 2 to 20 carbon atoms and may include double bonds, aromatic rings, or ether groups); amides, such as dimethylformamide; dioxolanes, such as 1,3-dioxolane, 1,4-dioxolane, and the like; sulfolanes; and the like.

The non-aqueous organic solvent may be used alone or as a mixture thereof.

In use of the carbonate-based solvent, a mixture of a cyclic carbonate and a chained carbonate may be used, and, in an embodiment, the cyclic carbonate and the chained carbonate may be mixed in a volume ratio of 1:1 to 1:9.

The lithium salt is a substance that is soluble in an organic solvent and functions as a source of lithium ions in a battery, enabling operation of a basic lithium battery while facilitating transfer of the lithium ions between the positive electrode and the negative electrode. The lithium salt may include at least one selected from among $LiPF_6$, $LiBF_4$, $LiSbF_6$, $LiAsF_6$, $LiClO_4$, $LiAlO_2$, $LiAlCl_4$, $LiPO_2F_2$, $LiCl$, $LiI$, $LiN(SO_3C_2F_5)_2$, $Li(FSO_2)_2N$ (lithium bis(fluorosulfonyl)imide (LiFSI)), $LiC_4F_9SO_3$, $LiN(C_xF_{2x+1}SO_2)(C_yF_{2y+1}SO_2)$ (where x and y are integers of 1 to 20), lithium trifluoromethane sulfonate, lithium tetrafluoroethane sulfonate, lithium difluorobis(oxalato)phosphate (LiDFOB), and lithium bis(oxalato)borate (LiBOB).

**Separator**

The separator may be interposed between the first electrode and the second electrode.

For such a separator, polyethylene, polypropylene, polyvinylidene fluoride, or at least two layers thereof may be used, as well as mixed layers, such as a polyethylene/polypropylene bilayer separator, a polyethylene/polypropylene/polyethylene trilayer separator, a polyethylene/polyethylene/polypropylene trilayer separator, and the like.

The separator may include a porous substrate and a coating layer that includes an organic material, an inorganic material, or a combination thereof on one or both surfaces of the porous substrate.

The porous substrate may be a polymer layer formed of a polymer selected from among polyolefins, such as polyethylene polypropylene, and the like, polyesters, such as polyethylene terephthalate, polybutylene terephthalate, and the like, polyacetal, polyamides, polyimides, polycarbonates, polyether ketones, polyarylether ketones, polyetherimides, polyamideimides, polybenzimidazole, polyethersulfone, polyphenylene oxides, cyclic olefin copolymers, polyphenylene sulfides, polyethylene naphthalate, glass fiber, and polytetrafluoroethylene (e.g., Teflon), copolymers thereof, or mixtures thereof.

The organic material may include a polyvinylidene fluoride polymer or a (meth)acrylic polymer.

The inorganic material may include inorganic particles selected from among $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, and combinations thereof, without being limited thereto.

The organic material and the inorganic material may be present in a mixed state in one coating layer or may be present in the form of a stack structure of a coating layer including the organic material and a coating layer including the inorganic material.

However, it is to be understood that the present invention is not limited thereto, and the case may have any of various shapes, such as a faceted, or prismatic, shape, a pouch shape, and the like. In addition, the case may be formed of a metal, such as aluminum, an aluminum alloy, nickel-plated steel, and the like, or may be composed of a laminated film or a plastic film that constitutes the pouch.

One or more embodiments of the present invention relate to electrode assemblies for rechargeable lithium batteries.

An electrode assembly for rechargeable lithium batteries according to an embodiment includes a current collector, a tab disposed on a lower surface of an uncoated portion of the current collector, and a securing member securing a side surface of the tab to a region of an uncoated portion of the current collector, wherein the securing member includes a thermoplastic resin.

The securing member includes a thermoplastic resin. The thermoplastic resin refers to a resin that melts upon application of heat thereto and returns to a solid state upon sufficient reduction in temperature thereof. The thermoplastic resin is melted in a process of manufacturing the electrode assembly for rechargeable lithium batteries and the melted thermoplastic resin may be used to secure the side surface of the tab to a region of the current collector while returning to a solid state after contacting the side surface of the tab and the region of the current collector. Accordingly, the securing member can prevent or substantially prevent generation of cracks on the current collector by preventing or substantially preventing deformation of the current collector in a hollow space adjacent to the tab, which can occur due to strong compression between the electrode plates by expansion of an active material layer region during repeated charging and discharging of the battery.

According to an embodiment, the securing member may be a continuous member extending along the side surface of the tab and the region of the uncoated portion of the current collector.

Herein, "continuous member" means that a region of the securing member on the side surface of the tab and a region of the securing member on the region of the uncoated portion of the current collector are not physically separated from each other and are integrally formed. Thus, the electrode assembly for rechargeable lithium batteries enables strong securing and engagement between the tab and the current collector and suppresses deformation at the uncoated portion of the current collector, thereby reducing generation of cracks.

According to an embodiment, the securing member may be a layer, a film, or a member having a certain (e.g., a predetermined) cross-sectional area.

According to an embodiment, the securing member may include 95 wt% or more, for example 95 wt% to 100 wt%, or 100 wt%, of the thermoplastic resin. Thus, the electrode assembly for rechargeable lithium batteries can further reduce generation of cracks without using an adhesive material and the like on the securing member.

According to an embodiment, the electrode assembly may further include a first film on a lower surface of the tab. The first film can facilitate manufacture of the electrode assembly for rechargeable lithium batteries described below and can protect the tab and the securing member from an external environment.

According to an embodiment, the first film may be secured to the lower surface of the tab and to the current collector.

In an embodiment, a first region surrounded by the first film, the tab, and the current collector may be at least filled with the securing member, for example, with the thermoplastic resin. As the first region is filled with the securing member, a space caused by a thickness difference around the tab can be filled therewith, and adhesion between the first film and the current collector can be increased.

According to an embodiment, the securing member may fill 50% or more of the first region in area ratio or may completely fill the first region. Thus, the securing member can significantly reduce generation of cracks on the current collector.

According to an embodiment, the first region may have an area in a range from a minimum value in Equation 1 to a maximum value in Equation 2 below. Within this range, the electrode assembly can prevent or substantially prevent generation of cracks on the current collector, can allow the first film to be stably secured to the current collector, and can secure strong coupling of the tab at the uncoated portion.

According to an embodiment, the first film may have a higher melting point than the thermoplastic resin. Thus, the first film can facilitate manufacture of the electrode assembly for rechargeable lithium batteries described below.

According to an embodiment, the thermoplastic resin may be further disposed between the lower surface of the tab and the first film. Thus, coupling between the tab and the first film can be strong.

According to an embodiment, the first film may be a thermally conductive film. The first film that is thermally conductive can facilitate manufacture of the electrode assembly for rechargeable lithium batteries, as described below.

In an embodiment, the first film may be a polypropylene film, a polyimide film, or a polyester film, for example, a polyethylene terephthalate film.

According to an embodiment, the thermoplastic resin may include at least one selected from among polyethylene resins, for example, a high density polyethylene resin, a low density polyethylene resin, and the like, crystalline resins, for example, polypropylene, polyamide, polyacetal, and the like, and amorphous resins, for example, polystyrene, acrylonitrile butadiene, polycarbonate, poly(methyl methacrylate), and the like.

According to an embodiment, an adhesive layer may be further disposed between the first film and a region of the uncoated portion of the current collector in which the securing member is not disposed. Thus, adhesion between the current collector and the first film can be further increased.

According to an embodiment, a second film may be disposed on an upper surface of the current collector, for example, on the uncoated portion of the current collector. Thus, the second film can protect the uncoated portion on the upper surface of the current collector.

In an embodiment, the second film may be the same as or different from the first film.

In an embodiment, the second film may be a heat-resistant (e.g., high heat-resistant) film. In an embodiment, the second film may be a stack of a heat-resistant (e.g., high heat- resistant) film and an adhesive layer.

In an embodiment, the second film may be a polypropylene film, a polyimide film, or a polyester film, for example, a polyethylene terephthalate film.

FIG. 2 is a partial cross-sectional view of an electrode assembly for rechargeable lithium batteries according to an embodiment.

Referring to FIG. 2, the electrode assembly according to an embodiment may include a current collector 10, a tab 20 disposed on a lower surface of the current collector, and a securing member 30 disposed on a side surface 21 of the tab and in a region of an uncoated portion 11 of the current collector.

The current collector 10 includes an active material layer region 12 and a region not formed with an active material layer, that is, the uncoated portion 11. In an embodiment, although not shown in FIG. 2, the active material layer regions and the uncoated portions are alternately disposed.

The tab 20 is formed on the uncoated portion in a region on the lower surface of the current collector. In an embodiment, the tab may be a middle tab. The tab may be formed on the uncoated portion by any typical method known to those skilled in the art.

The securing member 30 is disposed on the side surface of the tab and in a region of the uncoated portion of the current collector. In an embodiment, as shown in FIG. 2, a region of the securing member on the side surface of the tab and a region of the securing member on the current collector may be continuous. This structure can relieve local stress on the current collector around the tab during charging and discharging, thereby reducing cracking and deformation of the current collector.

As shown in FIG. 2, the securing member may be a continuous film including a thermoplastic resin. In an embodiment, the securing member may be a continuous layer including the thermoplastic resin or a member including the thermoplastic resin and having a certain (e.g., predetermined) continuous cross-sectional area. In an embodiment, the securing member may be a member having a same cross-sectional area as a first region surrounded by the first film, the tab, and the current collector, which will be described below.

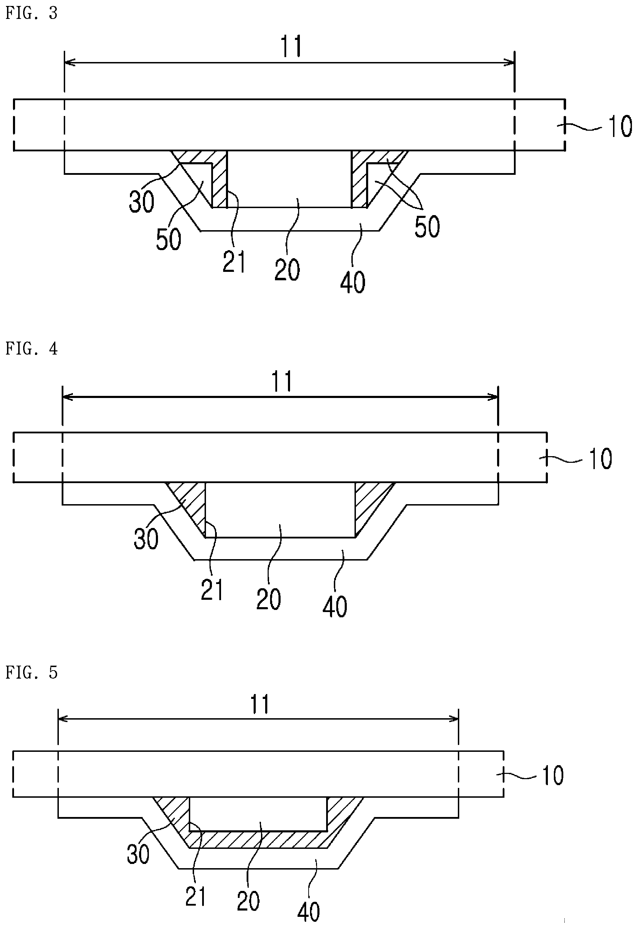

FIG. 3 is a partial cross-sectional view of an electrode assembly for rechargeable lithium batteries according to another embodiment. FIG. 4 is a partial cross-sectional view of an electrode assembly for rechargeable lithium batteries according to another embodiment.

Referring to FIG. 3, the electrode assembly according to the present embodiment may include a current collector 10, a tab 20 disposed on a lower surface of the current collector 10, and a securing member 30 disposed on a side surface 21 of the tab and in a region of an uncoated portion 11 of the current collector, and further includes a first film 40 disposed on a lower surface of the tab.

The electrode assembly according to the present embodiment is substantially the same as the electrode assembly shown in FIG. 2 except that the electrode assembly further includes the first film 40.

The first film 40 may be secured to the lower surface of the tab 20 and to the current collector 10. Thus, a first region 50 surrounded by the first film 40, the tab 20, and the current collector 10 may be formed. In an embodiment, a portion of the first region 50 may be at least partially filled with the securing member 30.

In an embodiment, 50% or more of the first region 50 in area ratio may be filled with the securing member 30, for example, a thermoplastic resin, or may be completely filled therewith, as shown in FIG. 4. This structure can strengthen coupling of the tab 20 to the uncoated portion and can reduce generation of cracks on the current collector 10 by the securing member 30. Further, the first film 40 can be reliably secured to the current collector 10 even without an additional adhesive layer between the current collector 10 and the first film 40, particularly between a region of the current collector 10 not provided with the securing member 30 and the first film 40.

According to an embodiment, the first region 50 may have an area in a range from a minimum value of the following Equation 1 to a maximum value of the following Equation 2. Within this range, the electrode assembly can prevent or substantially prevent crack generation on the current collector 10 while ensuring that the first film 40 can be stably secured to the current collector 10.

$$\text{Minimum value of area of first region} = T^2/2, \qquad \text{--- (Equation 1);}$$

and

$$\text{Maximum value of area of first region} = (T \times W)/2, \qquad \text{--- (Equation 2),}$$

where T is the thickness of the tab (unit: mm), and W is the width of the first region (unit: mm).

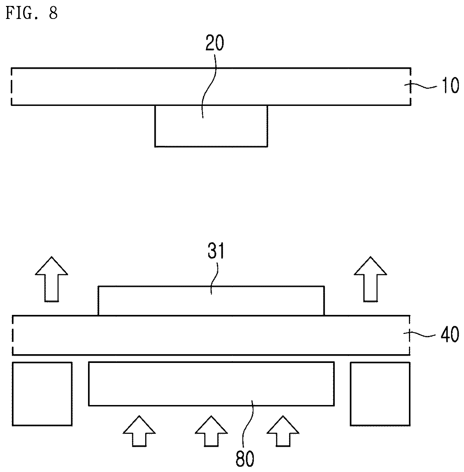

In an embodiment, the first film 40 may have a higher melting temperature than the thermoplastic resin of the securing member 30. With this structure, the electrode assembly can be easily manufactured by a method described below with reference to FIG. 8.

FIG. 5 is a partial cross-sectional view of an electrode assembly for rechargeable lithium batteries according to another embodiment.

Referring to FIG. 5, the electrode assembly according to the present embodiment includes a current collector 10, a tab 20 disposed on a lower surface of the current collector, and a securing member 30 disposed on a side surface 21 of the tab and in a region of the current collector 10, and may further include a first film 40 on the lower surface of the tab 20, wherein a thermoplastic resin may be further disposed between a lower surface of the tab 20 and the first film 40.

The electrode assembly according to the present embodiment is substantially the same as the electrode assemblies shown in FIG. 3 and FIG. 4 except that the thermoplastic is further disposed between the lower surface of the tab 20 and the first film 40.

The thermoplastic resin may be further disposed between the lower surface of the tab 20 and the first film 40. With this structure, the first film 40 can be reliably secured to the current collector even without an additional adhesive layer between the current collector and the first film, particularly between a region of the current collector 10 not provided with the securing member 30 and the first film 40.

In an embodiment, the thermoplastic resin may be the same as or different from the thermoplastic resin contained in the securing member 30. In an embodiment, the thermoplastic resin may be the same as the thermoplastic resin contained in the securing member 30, thereby improving manufacturing processability of the electrode assembly.

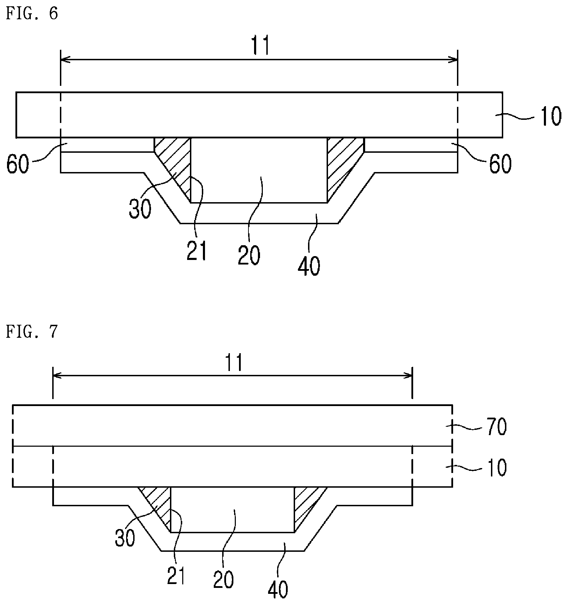

FIG. 6 is a partial cross-sectional view of an electrode assembly for rechargeable lithium batteries according to another embodiment.

Referring to FIG. 6, the electrode assembly according to the present embodiment may include a current collector 10, a tab 20 disposed on a lower surface of the current collector 10, and a securing member 30 disposed on a side surface 21 of the tab 20 and in a region of an uncoated portion 11 of the current collector 10, and may further include a first film 40 on a lower surface of the tab 20 and an adhesive layer 60 between the first film 40 and a region of the uncoated portion 11 of the current collector which is not provided with the securing member 30.

The adhesive layer 60 may be any typical adhesive layer known to those skilled in the art.

FIG. 7 is a partial cross-sectional view of an electrode assembly for rechargeable lithium batteries according to another embodiment.

Referring to FIG. 7, the electrode assembly according to the present embodiment may include a current collector 10, a tab 20 disposed on a lower surface of the current collector, and a securing member 30 disposed on a side surface 21 of the tab 20 and in a region of an uncoated portion 11 of the current collector 10, and may further include a first film 40 disposed on a lower surface of the tab 20 and a second film 70 disposed on an upper surface of the current collector 10.

The second film 70 is the same as described above.

FIG. 8 illustrates a method of manufacturing an electrode assembly for rechargeable lithium batteries according to an embodiment.

Referring to FIG. 8, an electrode assembly for rechargeable lithium batteries may be manufactured by securing a tab 20 to a lower surface of a current collector 10 and securing a thermoplastic film 31 for the securing member to an upper surface of a first film 40, followed by thermally compressing the thermoplastic film through a heat compression member 80, as indicated by an arrow in FIG. 8.

Next, a method of manufacturing an electrode assembly for rechargeable lithium batteries according to another embodiment will be described.

This method may include securing a tab to a lower surface of a current collector, thermally compressing a thermoplastic film through a heat compression member to form a securing member, and attaching a first film to the current collector.

Although the present invention has been described with reference to some example embodiments and drawings illustrating aspects thereof, the present invention is not limited thereto.

## Claims

1. An electrode assembly comprising:

   a current collector (10);
   a tab (20) on a lower surface of an uncoated portion (11) of the current collector (10); and
   a securing member (30) securing a side surface (21) of the tab (20) to a region of the uncoated portion (11) of the current collector (10),
   wherein the securing member (30) comprises a thermoplastic resin.

2. The electrode assembly as claimed in claim 1, wherein the securing member (30) is a continuous member extending along the side surface (21) of the tab (20) and the region of the uncoated portion (11) of the current collector (10).

3. The electrode assembly as claimed in claim 1 or 2, wherein the securing member (30) is a layer, a film, or a member having a certain cross-sectional area.

4. The electrode assembly as claimed in any one of the preceding claims, further comprising a first film (40) on a lower surface of the tab (20).

5. The electrode assembly as claimed in claim 4, wherein the first film (40) is secured to the lower surface of the tab (20) and to the current collector (10).

6. The electrode assembly as claimed in claim 5, wherein a first region (50) surrounded by the first film (40), the tab (20), and the current collector (10) is at least partially filled with the securing member (30).

7. The electrode assembly as claimed in claim 6, wherein 50% or more of the first region (50) in area ratio is filled with the securing member (30).

8. The electrode assembly as claimed in claim 7, wherein the first region (50) is completely filled with the securing member (30).

9. The electrode assembly as claimed in claim 7, wherein the first region (50) has an area in a range from a minimum value of the following Equation 1 to a maximum value of the following Equation 2:

$$\text{minimum value of area of first region} = T^2/2, \qquad \text{--- (1);}$$

$$\text{maximum value of area of first region} = (T \times W)/2, \qquad \text{--- (2),}$$

where T is a thickness of the tab (20) (unit: mm) and W is a width of the first region (unit: mm).

10. The electrode assembly as claimed in claim 5, wherein the thermoplastic resin is further located between the lower surface of the tab (20) and the first film (40).

11. The electrode assembly as claimed in claim 5, further comprising an adhesive layer (60) between the current collector (10) and the first film (40).

12. The electrode assembly as claimed in claim 4, wherein the first film (40) is a thermally conductive film.

13. The electrode assembly as claimed in claim 4, wherein the first film (40) has a higher melting temperature than the thermoplastic resin of the securing member (30).

14. The electrode assembly as claimed in claim 1, wherein the tab (20) is a middle tab (20).

**15.** A rechargeable lithium battery comprising the electrode assembly as claimed in any one of the preceding claims.

FIG. 1

FIG. 2

FIG. 3

FIG. 4

FIG. 5

FIG. 6

FIG. 7

FIG. 8

Europäisches
Patentamt
European
Patent Office
Office européen
des brevets

## EUROPEAN SEARCH REPORT

**Application Number**

EP 25 17 2109

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/224546 A1 (HAMA YOSHIKI [JP] ET AL) 29 August 2013 (2013-08-29) <br> * figure 19 * <br> * figure 21 * <br> * paragraph [0102] - paragraph [0105] * <br> * paragraph [0025] * <br> * claim 18 * | 1-15 | INV. <br> H01M4/64 <br> H01M10/052 <br> H01M10/42 <br> H01M50/534 <br> H01M50/536 <br><br> ADD. |
| A | US 2006/222935 A1 (TAKAHASHI TETSUYA [JP] ET AL) 5 October 2006 (2006-10-05) <br> * claims 1-8 * <br> * figures 1-9 * | 1-15 | H01M4/66 |
| A | JP 2009 272161 A (TOYOTA MOTOR CORP) 19 November 2009 (2009-11-19) <br> * figures 1-10 * <br> * abstract * | 1-15 | |
| A | WO 2017/145212 A1 (PANASONIC IP MAN CO LTD [JP]) 31 August 2017 (2017-08-31) <br> * figures 1-3 * <br> * abstract * | 1-15 | |
| A | JP 2023 087373 A (PRIME PLANET ENERGY & SOLUTIONS INC) 23 June 2023 (2023-06-23) <br> * figures 1-17 * <br> * figure 4 * | 1-15 | TECHNICAL FIELDS SEARCHED (IPC) <br><br> H01M |
| A | WO 2017/149949 A1 (PANASONIC IP MAN CO LTD [JP]) 8 September 2017 (2017-09-08) <br> * figures 1-8 * <br> * abstract * | 1-15 | |

The present search report has been drawn up for all claims

| Place of search | Date of completion of the search | Examiner |
|---|---|---|
| The Hague | 15 August 2025 | Godino Martinez, M |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 17 2109

15-08-2025

| Patent document cited in search report | | | Publication date | Patent family member(s) | | | Publication date |
|---|---|---|---|---|---|---|---|
| US 2013224546 | A1 | | 29-08-2013 | CN | 103119675 | A | 22-05-2013 |
| | | | | EP | 2620964 | A1 | 31-07-2013 |
| | | | | JP | 5958340 | B2 | 27-07-2016 |
| | | | | JP WO2012039497 | | A1 | 03-02-2014 |
| | | | | KR | 20130115263 | A | 21-10-2013 |
| | | | | US | 2013224546 | A1 | 29-08-2013 |
| | | | | WO | 2012039497 | A1 | 29-03-2012 |
| US 2006222935 | A1 | | 05-10-2006 | CN | 1841606 | A | 04-10-2006 |
| | | | | EP | 1708214 | A2 | 04-10-2006 |
| | | | | JP | 4670430 | B2 | 13-04-2011 |
| | | | | JP | 2006278897 | A | 12-10-2006 |
| | | | | TW | I294629 | B | 11-03-2008 |
| | | | | US | 2006222935 | A1 | 05-10-2006 |
| JP 2009272161 | A | | 19-11-2009 | NONE | | | |
| WO 2017145212 | A1 | | 31-08-2017 | JP WO2017145212 | | A1 | 13-12-2018 |
| | | | | WO | 2017145212 | A1 | 31-08-2017 |
| JP 2023087373 | A | | 23-06-2023 | JP | 7373544 | B2 | 02-11-2023 |
| | | | | JP | 2023087373 | A | 23-06-2023 |
| WO 2017149949 | A1 | | 08-09-2017 | CN | 108475756 | A | 31-08-2018 |
| | | | | JP | 6960586 | B2 | 05-11-2021 |
| | | | | JP WO2017149949 | | A1 | 27-12-2018 |
| | | | | US | 2018358608 | A1 | 13-12-2018 |
| | | | | WO | 2017149949 | A1 | 08-09-2017 |